# FASCICULE DE BREVET EUROPEEN

(11) **EP 4 438 215 B1**
(45) Date de publication et mention de la délivrance du brevet: **24.12.2025**
(21) Numéro de dépôt: 24166439.0
(22) Date de dépôt: 26.03.2024
(51) Int. Cl.: B23K 11/00, B23K 11/16, B23K 11/18, B23K 15/00, B23K 20/02, B23K 20/227, B23K 20/233, B23K 20/24, B23K 26/244, B23K 26/26, F28F 3/12, B23K 101/04, B23K 101/14, B23K 103/04, B23K 103/08, B23K 103/12, B23K 103/18

(54) **PROCEDE DE FABRICATION D'UNE STRUCTURE COMPRENANT DES CAVITES, ET STRUCTURE CORRESPONDANTE.**
VERFAHREN ZUR HERSTELLUNG EINER STRUKTUR MIT HOHLRÄUMEN, UND ENTSPRECHENDE STRUKTUR
METHOD FOR MANUFACTURING A STRUCTURE COMPRISING CAVITIES, AND CORRESPONDING STRUCTURE

(30) Priorité: 27.03.2023 FR 2302883
(43) Date de publication de la demande: 02.10.2024
(73) Titulaire: Commissariat à l'Energie Atomique et aux Energies Alternatives, 75015 Paris (FR)
(72) Inventeur: MONTEREMAND, Mathieu, 38054 GRENOBLE cedex 09 (FR); CIGNA, Julien, 38054 GRENOBLE CEDEX 09 (FR)
(74) Mandataire: Santarelli

(56) Documents cités:
- WO-A1-2011/026925
- FR-A1- 2 879 489
- JP-A- 2000 310 470

## Description

### DOMAINE TECHNIQUE

La présente invention se rapporte au domaine des échangeurs de chaleur, et de manière plus générale aux structures comprenant des cavités, par exemple des canaux de circulation de fluide.

L'invention concerne un procédé de fabrication d'une structure comportant des cavités, et une structure comportant des cavités, voir les revendications 1 et 8.

L'invention trouve des applications dans de nombreux domaines industriels et, notamment, pour la fabrication d'échangeurs thermiques.

L'invention est particulièrement intéressante puisqu'elle permet d'obtenir des éléments comprenant des cavités, les cavités pouvant être de formes simples ou complexes.

### ÉTAT DE LA TECHNIQUE ANTÉRIEURE

Actuellement, pour réaliser une structure comprenant des parties évidées, plusieurs méthodes sont possibles.

Une première solution consiste à fabriquer le composant par fabrication additive (ou impression 3D). Des pièces de formes géométriques complexes avec de bonnes caractéristiques mécaniques peuvent être obtenues. Cependant, les tolérances dimensionnelles et géométriques ne sont souvent pas respectées.

Une deuxième solution consiste à former des canaux par retrait de matière dans une pièce élémentaire massive. Cependant, une telle technique d'usinage ne permet pas d'obtenir toutes les géométries, sections et longueurs de canaux désirées.

Une troisième solution consiste à assembler des pièces élémentaires entre elles selon diverses techniques, comme par exemple le soudage par fusion, le brasage, ou encore le soudage diffusion.

Le soudage diffusion est actuellement une des voies les plus prometteuses, et plus particulièrement le soudage par Compression Isostatique à Chaud (CIC). La force de compression est obtenue par l'application d'un gaz sous pression sur toutes les parois des composants à assembler. Pour réaliser un composant comportant des parties évidées avec cette technique, trois méthodes existent.

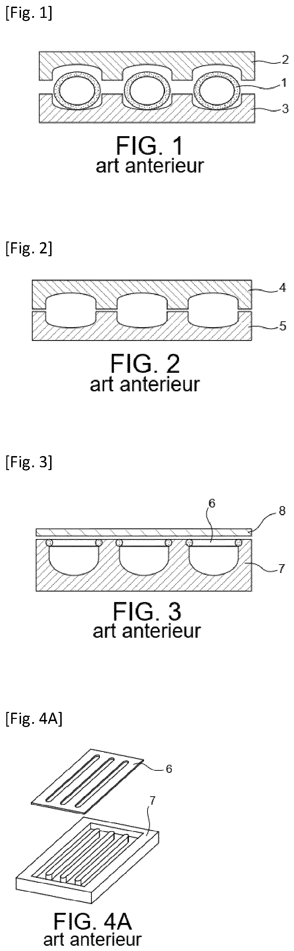

La première méthode, représentée sur la figure 1, consiste à utiliser des tubes 1 qui sont pris en sandwich entre deux plaques rainurées 2, 3. La forme des rainures est identique aux tubes. Les tubes peuvent être pré-déformés pour obtenir différentes sections (exemple : carrée, rectangulaire) ou alors pour avoir différentes courbures dans la longueur.

Cependant, avec cette première méthode, seules des parties évidées de formes géométriques simples peuvent être obtenues.

La deuxième méthode, représentée sur la figure 2, consiste à réaliser un assemblage au moyen de deux cycles de soudage diffusion. Une telle méthode est décrite dans le document WO 2011/026925 A1. Plusieurs plaques 4, 5, dont au moins une plaque rainurée, sont superposées. Un cordon est disposé entre les deux plaques. Une étape de traitement est réalisée pour obtenir un soudage par diffusion du cordon de matière sur les plaques 4, 5. Le premier cycle est réalisé à basse pression. Les parties évidées sont fermées aux extrémités. Comme le gaz ne peut pas pénétrer à l'interface, le soudage diffusion se fait. La jonction est étanche. Cependant, des pores de fortes dimensions résident et l'ensemble présente une faible résistance mécanique. Ainsi, le procédé comprend ensuite une étape de consolidation de l'ensemble par compression isostatique à chaud, pour obtenir un soudage par diffusion de ses éléments. Ce cycle est lancé à haute pression, les parties évidées sont ouvertes pour fermer les pores et faire disparaître la jonction.

Le principal inconvénient de cette deuxième méthode est qu'il est quasiment impossible de fabriquer des parties évidées sans les déformer. En effet, comme aucune pression n'est présente à l'intérieur des canaux, lors du premier cycle, ceux-ci peuvent se déformer.

Afin d'éviter la déformation/l'affaissement des canaux, il est possible d'introduire, dans les canaux, un matériau pouvant être par la suite éliminé ou retiré, par exemple, par voie chimique ou mécanique. Une telle solution est par exemple décrite dans le document JP 2006/263746 A. Cependant, il peut être difficile, non seulement de trouver le bon matériau de remplissage, mais aussi de réussir à l'éliminer complètement.

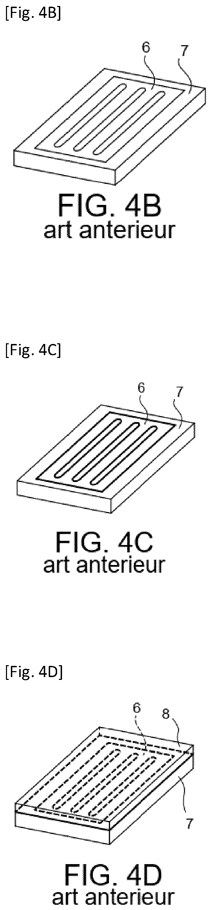

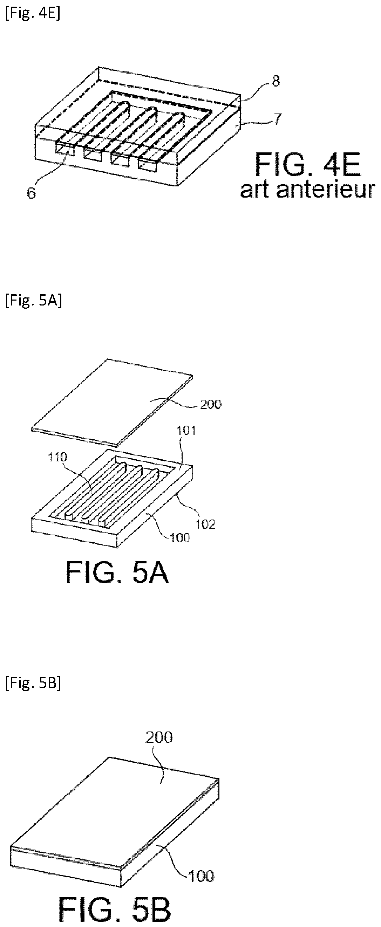

Une troisième méthode consiste à réaliser un soudage laser de plaques 6 de fines dimensions sur les canaux formés dans un substrat 7, puis de souder un couvercle 8 sur l'ensemble obtenu. Cette méthode est par exemple représentée sur la figure 3. Une telle méthode est également décrite dans le document WO 2006/067349 A1. Plus particulièrement, cette méthode comprend les étapes suivantes :
- fournir un substrat 7 dans lequel des rainures ont été réalisées afin de constituer le fond de la partie évidée (figure 4A),
- disposer des lames 6 de fine épaisseur au sommet des rainures afin de fermer la partie évidée (figure 4B),
- souder les lames 6 au substrat 7 par soudure laser bord/bord afin de garantir une étanchéité (figure 4C),
- déposer un couvercle 8 au-dessus de l'ensemble formé par le substrat 7 et par les lames 6 (figure 4D),
- souder le substrat 7 et le couvercle 8 par diffusion par compression isostatique à chaud (figure 4E).

Cependant, cette dernière méthode présente de nombreux inconvénients. En particulier, l'emboitement de lames de fines épaisseurs dans les rainures nécessite des tolérances de largeur strictes (0,1 mm), ce qui non seulement augmente les coûts d'usinage mais complexifie le procédé car il demeure difficile d'emboîter et de souder les fines lames dans les emboitements sans déformation, déplacement et/ou décalage, notamment quand il s'agit de parties évidées de formes complexes.

FR 2 879 489 A1 décrit le préambule des revendications 1 et 8 respectivement.

### EXPOSÉ DE L'INVENTION

Un but de la présente invention est de proposer un procédé remédiant aux inconvénients de l'art antérieur, et en particulier, un procédé permettant de former une structure comprenant des cavités, les cavités pouvant être de forme simple ou complexe, tout en évitant les phénomènes de déformations, déplacements et/ou décalage.

Pour cela, la présente invention propose un procédé de fabrication d'une structure comprenant des cavités tel que défini dans la revendication 1, le procédé comprenant les étapes suivantes :
a) former des zones évidées dans une première face d'un substrat en un premier matériau,
b) déposer une plaque en un deuxième matériau sur la première face du substrat, de manière à recouvrir les zones évidées du substrat,
c) réaliser un soudage par résistance, ou un soudage laser par transparence, sous vide, autour des zones évidées, moyennant quoi on soude la plaque sur le substrat et on forme des cavités,
d) réaliser une étape de soudage par diffusion en compression isostatique à chaud sur l'ensemble obtenu.

L'invention se distingue fondamentalement de l'art antérieur par le dépôt d'une plaque sur le substrat et par la mise en œuvre d'une étape de soudage par transparence sous vide de la plaque sur le substrat sur tout le contour des zones évidées du substrat pour former des cavités étanches. Le soudage peut être un soudage par résistance par transparence, ou un soudage laser par transparence. Cette étape assure l'étanchéité au niveau de la jonction substrat/plaque. Ainsi, non seulement, le pourtour des cavités est rendu étanche, mais en plus, cette étape limite voire évite la pollution/oxydation des surfaces emprisonnées.

L'utilisation d'un environnement sous vide permet, à même puissance du faisceau que sous gaz neutre, d'obtenir un cordon de soudure plus fin et plus pénétrant. Le soudage a lieu à l'interface plaque/substrat à travers la plaque.

L'étape de soudage par diffusion en compression isostatique à chaud permet de finaliser l'assemblage.

Avantageusement, lors de l'étape c), on réalise en outre un soudage laser par transparence sur le contour de la plaque.

Comme sous vide le cordon de soudure est plus fin et que l'atmosphère est homogène (il n'est pas nécessaire d'avoir une protection gazeuse à côté de la fusion comme lors d'un soudage sous gaz neutre), il est possible de souder des cavités de faibles largeurs et/ou au fond d'un puit étroit et profond.

Avantageusement, après l'étape c) on réalise une étape de dégazage à l'interface plaque/substrat.

Selon cette variante avantageuse, le procédé comprend, entre l'étape c) et l'étape d), les étapes successives suivantes :
- déposer un capot sur la plaque,
- souder le capot sur la plaque,

Avantageusement, après avoir soudé le capot sur la plaque, le procédé comprend une étape au cours de laquelle on réalise une étape de dégazage à l'interface plaque/capot. Avantageusement, le capot est soudé sur la plaque par soudage laser, par transparence, de préférence sous vide.

Avantageusement, le premier matériau et le deuxième matériau sont indépendamment choisis parmi le cuivre et ses alliages, le titane et ses alliages, l'aluminium et ses alliages, les aciers et le vanadium. Le premier matériau et le deuxième matériau peuvent être identiques ou différents.

Le procédé présente de nombreux avantages :
- obtenir une soudure uniforme (en termes de composition chimique et de microstructure) quasi-exempte de contraintes résiduelles.
- assembler des matériaux identiques entre eux (tels que les aciers, les alliages d'aluminium, les alliages de titane, les alliages de cuivre) ou assembler des matériaux de compositions chimiques très différentes, (par exemple des assemblages aciers/cuivre, aciers/vanadium...),
- présenter un moindre coût de mise en œuvre par rapport aux procédés de l'art antérieur, et notamment un moindre coût d'usinage,
- pouvoir fabriquer des structures ayant des cavités de formes complexes,
- éviter les phénomènes de déformation,
- ne pas mettre en œuvre d'étape d'emboitement.

L'invention concerne également une structure telle que définie dans la revendication 8. La structure comprend :
- un substrat en un premier matériau comprenant des zones évidées dans une première face du substrat,
- une plaque en un deuxième matériau recouvrant les zones évidées du substrat, la plaque étant soudée sur le substrat autour des zones évidées par une soudure obtenue par transparence sous vide, par soudage résistance, par soudage laser, et par diffusion en compression isostatique à chaud, les zones évidées délimitées par le substrat et la plaque formant des cavités,
- éventuellement, un capot soudé sur la plaque.

Avantageusement, le premier matériau et le deuxième matériau sont indépendamment choisis parmi le cuivre et ses alliages, le titane et ses alliages, l'aluminium et ses alliages, les aciers, et le vanadium. Le premier matériau peut être identique ou différent du deuxième matériau.

Avantageusement, la structure est un échangeur de chaleur comprenant des cavités agencées pour faire circuler un fluide, les cavités formant des canaux de circulation d'un fluide : gaz ou liquide (exemple : N₂, eau, mélange de métaux fondus).

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
[Fig. 1]
[Fig. 2]
[Fig. 3] précédemment décrites, représentent différents modes de réalisation selon l'art antérieur.
[Fig. 4A]
[Fig. 4B]
[Fig. 4C]
[Fig. 4D]
[Fig. 4E] précédemment décrites, représentent différentes étapes d'un procédé selon l'art antérieur.
[Fig. 5A]
[Fig. 5B]
[Fig. 5C]

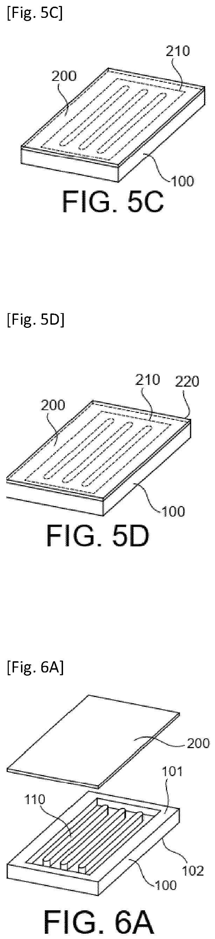

[Fig. 5D] représentent différentes étapes d'un procédé selon un mode de réalisation particulier de l'invention.
[Fig. 6A]
[Fig. 6B]
[Fig. 6C]
[Fig. 6D]

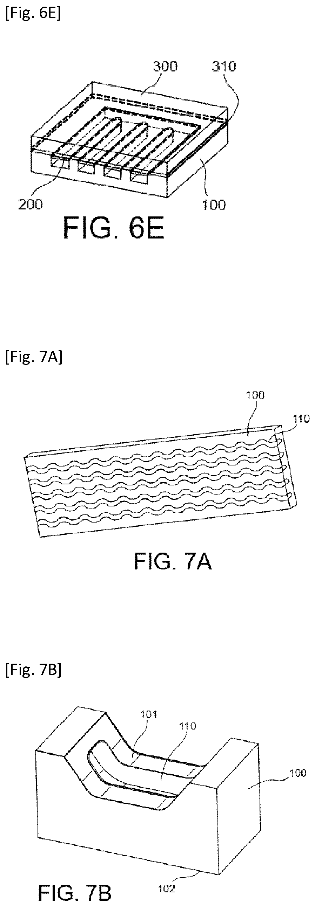

[Fig. 6E] représentent différentes étapes d'un procédé selon un autre mode de réalisation particulier de l'invention.
[Fig. 7A]
[Fig. 7B] sont des représentations schématiques en trois dimensions de différents substrats utilisés pour mettre en œuvre le procédé selon différents modes de réalisation particuliers de l'invention,
[Fig. 8] est un cliché photographique de différents substrats utilisés pour mettre en œuvre le procédé selon un autre mode de réalisation particulier de l'invention.
[Fig. 9] est un cliché photographique de différentes structures obtenues après soudage laser sous vide par transparence d'une plaque sur les différents substrats de la figure 8, selon un autre mode de réalisation particulier de l'invention.
[Fig. 10] est une coupe métallographique de la soudure d'une des structures représentées sur la figure 9.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

En outre, dans la description ci-après, des termes qui dépendent de l'orientation, tels que « dessus », « dessous », etc. d'une structure s'appliquent en considérant que la structure est orientée de la façon illustrée sur les figures.

### EXPOSÉ DÉTAILLÉ DE MODES DE RÉALISATION PARTICULIERS

Bien que cela ne soit aucunement limitatif, l'invention trouve particulièrement pour fabriquer une structure comportant des canaux de circulation de fluide destiné notamment, mais non exclusivement, à l'échange de chaleur entre deux fluides.

Nous allons maintenant décrire plus en détail un procédé de fabrication d'une structure comprenant des cavités en faisant référence aux figures 5A à 5F annexées. Le procédé comprend les étapes suivantes :
a) former des zones évidées 110 dans une première face 101 d'un substrat 100 en un premier matériau (figure 5A),
b) déposer une plaque 200 en un deuxième matériau sur la première face 101 du substrat 100, de manière à recouvrir les zones évidées du substrat 100 (figure 5B),
c) réaliser un soudage par résistance, ou un soudage laser par transparence, sous vide, autour des zones évidées, moyennant quoi on soude la plaque 200 sur le substrat 100 et on forme des cavités étanches (figure 5C),
d) réaliser une étape de soudage par diffusion en compression isostatique à chaud sur l'ensemble obtenu (figure 5D).

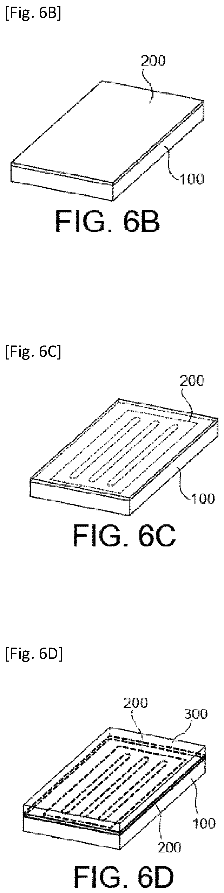

Selon une variante de réalisation, le procédé comprend, en outre, entre l'étape c) et l'étape d), les étapes de déposer un capot 300 sur la plaque 200 et de souder le capot 300 à la plaque 200. Ainsi selon cette variante de réalisation, représentée par exemple sur les figures 6A à 6E annexées, le procédé comprend les étapes suivantes :
a) former des zones évidées 110 dans une première face 101 d'un substrat 100 en un premier matériau (figure 6A),
b) déposer une plaque 200 en un deuxième matériau sur la première face 101 du substrat 100, de manière à recouvrir les zones évidées 110 du substrat 100 (figure 6B),
c) réaliser un soudage par transparence tel que le soudage par résistance, ou par laser, sous vide autour des zones évidées 110, moyennant quoi on soude la plaque 200 sur le substrat 100 et on forme des cavités étanches (figure 6C),
   - déposer un capot 300 sur la plaque 200,
   - souder le capot 300 sur la plaque 200 (figure 6D),
d) réaliser une étape de soudage par diffusion en compression isostatique à chaud sur l'ensemble obtenu (figure 6E).

Le substrat 100 comprend une première face 101 et une deuxième face 102. La première face 101 peut être parallèle à la deuxième face 102. Elle peut également ne pas être parallèle à la deuxième face 102. Par exemple, la première face 101 peut être plane (figure 7A) ou présenter des reliefs (figure 7B).

Lors de l'étape a), le substrat 100 est usiné pour former des zones évidées. Les zones évidées 110 peuvent être de formes simples (par exemple de formes longitudinales). Les zones évidées sont, par exemple, des rainures (i.e. des entailles longitudinales pouvant être étroites). Les zones évidées peuvent être également de formes complexes (par exemple, elles peuvent présenter des virages, des zigzags).

Les zones évidées 110 peuvent être de section et de cheminement très variés. Elles peuvent notamment présenter une section rectangulaire, polygonale, semi- circulaire. Elles peuvent également présenter une section qui varie selon leur longueur. Leur cheminement peut être droit ou non. Il peut présenter des allers-retours et/ou des virages serrés.

Les zones évidées peuvent être en 2D (i.e. dans un même plan (x, y)) ou en 3D (i.e. leur position peut varier dans un plan (x, y, z)).

Avantageusement, chaque zone évidée 110 débouche au moins à l'une de ses extrémités. De préférence, les zones évidées ont deux extrémités et les deux extrémités sont débouchantes.

Dans un mode de réalisation particulier, il est possible de former des zones évidées 110 dans la première face 101 et dans la deuxième face 102 du substrat 100. Il est alors possible de disposer une autre plaque sur la deuxième face 102 du substrat 100, le substrat étant pris en sandwich entre les deux plaques. Ce mode de réalisation permet de former une structure compacte.

Toutes les surfaces à assembler sont, avantageusement, nettoyées et/ou prétraitées (par exemple par décapage chimique ou usinage léger) afin d'obtenir une surface propre et afin d'améliorer les caractéristiques de la jonction (par exemple caractéristiques mécaniques ou électriques).

La plaque 200 utilisée lors de l'étape b) est choisie de manière à pouvoir souder la plaque sur le substrat par transparence. La plaque 200 est déposée et alignée sur le substrat 100. Cet ajustement est simple à mettre en œuvre car la plaque 200 est une plaque pleine. La surface de la plaque 200 recouvre au moins l'ensemble des zones évidées 110. Elle recouvre, de préférence, la totalité de la première face 101 du substrat 100.

Avantageusement, avant d'être assemblés, la plaque 200 et le substrat 100 sont nettoyés et/ou usinés pour retirer l'oxyde de surface pouvant être présent à la surface de ces pièces et/ou avoir une bonne rugosité. La propreté des jonctions à assembler est ainsi garantie. Cette étape conduit à une amélioration des propriétés mécaniques au niveau de la jonction.

Selon une première variante de réalisation, la plaque 200 peut jouer le rôle de couvercle. Ceci permet de réduire le nombre d'étapes et d'éléments nécessaires à la mise en œuvre du procédé. Les coûts sont ainsi réduits. L'épaisseur de la plaque 200 sera choisie de manière à être suffisamment faible pour obtenir une soudure étanche avec le substrat 100.

Selon une autre variante de réalisation, un capot 300 est soudé ultérieurement sur la plaque 200. Le capot 300 joue le rôle de couvercle. La surface du capot 300 est au moins égale à la surface de la plaque 200. Le capot 300 est la contre-forme qui permet d'ajouter la matière où cela est nécessaire.

Selon cette variante de réalisation, la plaque 200 peut également comporter des zones évidées. Les zones évidées de la plaque peuvent être fermées par le capot 300. Le capot 300 peut être sans zone évidée ou avec des zones évidées.

Selon cette variante de réalisation, l'épaisseur de la plaque 200 peut être plus fine que dans la variante de réalisation où la plaque joue également le rôle de couvercle.

Le premier matériau du substrat 100 et le deuxième matériau de la plaque 200 peuvent être identiques (i.e. il s'agit d'un assemblage homogène).

Autrement, le premier matériau et le deuxième matériau peuvent être différents (i.e. il s'agit d'un assemblage hétérogène).

Le premier matériau et le deuxième matériau peuvent être choisis indépendamment l'un de l'autre parmi : le cuivre et ses alliages, le titane et ses alliages l'aluminium et ses alliages, les aciers et le vanadium. Lors de l'étape c), la face de la plaque 200 disposée en vis-à-vis de la première face 101du substrat 100 et la première face 101 du substrat 100 forment l'interface à souder par diffusion.

La plaque 200 est soudée sur le substrat 100. Le soudage est réalisé sur tout le contour des zones évidées 110. La soudure 210 obtenue suit le contour des zones évidées 110 (figure 5C, 6C). La périphérie de l'interface est soudée de façon étanche et dégazée.

Grâce au soudage, on élimine l'utilisation de brasure. La température maximale à laquelle l'élément obtenu peut être utilisé est donc augmentée.

Le soudage par transparence peut être réalisé par laser, ou par résistance. Avantageusement, pour un soudage par résistance, les épaisseurs des éléments à souder seront typiquement inférieures à 3 mm. Le soudage par résistance est réalisé conformément à l'invention sous-vide.

Cette étape est de préférence réalisée par soudage laser par transparence sous vide.

Il est possible de former deux cordons de soudure pour chaque zone évidée 110. Toutefois, si les zones évidées sont très rapprochées les unes des autres, un seul cordon de soudure peut être suffisant.

Les conditions de soudage sont choisies de manière à obtenir une étanchéité au niveau de la jonction substrat/plaque.

Ainsi, le gaz sous pression qui sera appliquée lors du cycle de Compression Isostatique à Chaud (CIC) et qui rentrera dans les parties évidées ne sera pas présent à l'interface substrat 100/plaque 200 entre deux cordons de soudure laser.

Avantageusement, une coupe métallographique peut être réalisée sur des échantillons d'essais afin de vérifier la pleine pénétration du cordon et l'absence de défaut rédhibitoire dans les cordons de soudure comme définis dans la norme NF EN ISO 13919 mais ce contrôle est destructif.

Avantageusement, un test d'étanchéité à l'hélium avec une limite de détection de fuite de 1.10⁻¹⁰ mbar.l.s⁻¹ selon la norme NF EN ISO 20485 peut être réalisé pour garantir la bonne étanchéité de la soudure sous vide par transparence de chaque canal du substrat 100. Ce contrôle est non destructif.

Avantageusement, une radiographie ou une tomographie aux rayons X peut être faite pour vérifier l'absence de défaut rédhibitoire dans les cordons de soudure comme définis dans la norme NF EN ISO 13919. Ce contrôle est non destructif.

Avantageusement, lors de l'étape c), le contour des interfaces substrat 100/plaque 200 est également soudé. La soudure 220 permet de rendre l'ensemble étanche (figure 5D). Le cas échéant, le contour des interfaces capot 300/plaque 200 est également soudé. La soudure 310 permet de rendre l'ensemble étanche (figure 6D). Le soudage des contours est, de préférence, réalisé par soudage sous vide.

A l'issue de l'étape c), les cavités formées sont étanches.

Pour mettre en œuvre l'étape d), les cavités sont ouvertes au moins à l'une de leurs extrémités afin que le gaz puisse ainsi circuler à l'intérieur des parties évidées. Ainsi lors de l'étape d), la pression à l'intérieur des cavités peut augmenter et il n'y a pas de déformation des canaux lors de la mise en œuvre de cette étape. Cette ouverture peut être prévue lors de l'étape d'usinage du substrat 100, préalable au cycle de CIC.

Avantageusement, avant l'étape d), les interfaces substrat 100 /plaque 200 et/ou capot 300 /plaque 200 sont dégazées sous vide secondaire.

Lors de l'étape d), on réalise le soudage par diffusion par CIC. L'étanchéification des zones évidées 110 au moyen de la plaque 200 soudée lors de l'étape c) rend possible le soudage par diffusion par CIC sans déformation significative des canaux formés.

Ce soudage diffusion se fait en phase solide. Une température d'environ 0,5 à 0,9.Tf la température de fusion du matériau et une pression élevée sont appliquées sur les composants à assembler.

Pour les aciers et les alliages de nickel, la température de soudage est choisie typiquement entre 900°C et 1250°C. La pression est typiquement entre 700 bars et 1500 bars (soit entre 8.10⁷ Pa et 1,5.10⁸ Pa). Le temps de soudage est par exemple compris entre 1h et 10h, de préférence entre 2h et 5h.

Dans un premier temps, le contact est fait au niveau des pics rugueux de matière. Puis, différents mécanismes de diffusion ainsi qu'une migration du joint des joints de grains viennent fermer les pores. Ainsi, l'interface entre les deux pièces à assembler disparaît.

Si le vide du soudage laser de l'étape c) n'est pas satisfaisant, il est possible de réaliser avant l'étape de soudage diffusion par CIC, une étape au cours de laquelle on forme des trous, par exemple, par perçage et des queusots (i.e. des tubes qui permettent de tirer sous vide les interfaces substrat/plaque et/ou plaque/capot). Plus le vide est important au niveau des interfaces à souder, meilleures sont les caractéristiques mécaniques de la jonction.

Le soudage par diffusion ne produit aucune déformation des canaux.

Dans une variante de réalisation particulière, après l'étape de soudage par diffusion, il est possible de réduire l'épaisseur des différents éléments de la structure afin d'obtenir les dimensions souhaitées de la pièce à réaliser.

### Exemples illustratifs et non limitatifs d'un mode de réalisation

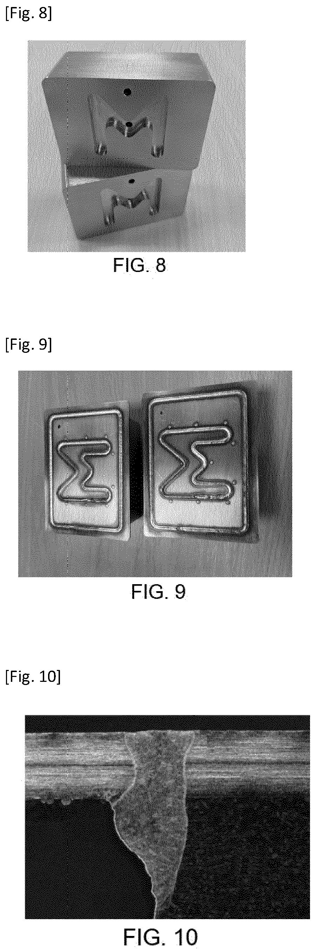

Dans cet exemple, un substrat 100 avec des zones évidées 110 en zig-zag, et plus particulièrement des zones évidées en forme de M, a été fabriqué (figure 8). Le substrat 100 est en acier.

Une plaque 200 en acier a été posée sur le substrat. Puis, les étapes suivantes sont réalisées :
- une étape de soudage laser par transparence sous vide est réalisée pour souder la plaque 200 sur le substrat 100, au moyen d'une soudure 210, et former ainsi des cavités étanches ; le contour du substrat 100 et de la plaque 200 a également été soudé par soudage laser par transparence,
- une étape de soudage par diffusion en compression isostatique à chaud de l'ensemble obtenu.

La figure 9 représente la pièce obtenue après l'étape de soudage laser par transparence sous vide.

Un test hélium a été réalisé pour vérifier l'étanchéité de la soudure laser. Le test est celui décrit au paragraphe A.3 de la norme ISO 20485 :2018 (« Essais non destructifs - Contrôle d'étanchéité - Méthode par gaz traceur »). La pièce présente une bonne étanchéité.

Une coupe métallographique confirme que la soudure 210 pénètre dans le substrat 100 (figure 10).

## Revendications

1. Procédé de fabrication d'une structure comprenant des cavités, le procédé comprenant les étapes suivantes :
a) former des zones évidées (110) dans une première face (101) d'un substrat (100) en un premier matériau,
le procédé **caractérisé par** les étapes suivantes :
b) déposer une plaque (200) en un deuxième matériau sur la première face (101) du substrat (100), de manière à recouvrir les zones évidées (110) du substrat (100),
c) réaliser un soudage par transparence sous vide, par soudage résistance ou par soudage laser, autour des zones évidées, moyennant quoi on soude la plaque (200) sur le substrat (100) et on forme des cavités,
d) réaliser une étape de soudage par diffusion en compression isostatique à chaud sur l'ensemble obtenu.

2. Procédé selon la revendication 1, **caractérisé en ce que**, lors de l'étape c), on réalise en outre un soudage laser par transparence sur le contour de la plaque (200).

3. Procédé selon l'une quelconque des revendications précédentes, **caractérisé en ce que**, après l'étape c) on réalise une étape de dégazage à l'interface plaque (200)/substrat (100).

4. Procédé selon l'une quelconque des revendications précédentes, **caractérisé en ce que** le procédé comprend, entre l'étape c) et l'étape d), les étapes successives suivantes :
- déposer un capot (300) sur la plaque (200),
- souder le capot (300) sur la plaque (200).

5. Procédé selon la revendication précédente, **caractérisé en ce que**, après avoir soudé le capot (300) sur la plaque (200), le procédé comprend une étape au cours de laquelle on réalise une étape de dégazage à l'interface plaque (200)/capot (300).

6. Procédé selon l'une des revendications 4 et 5, **caractérisé en ce que** le capot (300) est soudé sur la plaque (200) par soudage laser, de préférence sous vide.

7. Procédé selon l'une quelconque des revendications précédentes, **caractérisé en ce que** le premier matériau et le deuxième matériau sont indépendamment choisis parmi le cuivre et ses alliages, le titane et ses alliages, l'aluminium et ses alliages, les aciers et le vanadium, le premier matériau et le deuxième matériau pouvant être identiques ou différents.

8. Structure comprenant :
- un substrat (100) en un premier matériau comprenant des zones évidées (110) dans une première face (101) du substrat (100),
la structure **caractérisée par** :
- une plaque (200) en un deuxième matériau recouvrant les zones évidées (110) du substrat (100), la plaque (200) étant soudée sur le substrat (100) autour des zones évidées (110) par une soudure (210) obtenue par transparence sous vide, par soudage résistance ou par soudage laser et par diffusion en compression isostatique à chaud, les zones évidées (110) délimitées par le substrat (100) et la plaque (200) formant des cavités,
- éventuellement, un capot (300) soudé sur la plaque (200).

9. Structure selon la revendication 8, **caractérisée en ce que** le premier matériau et le deuxième matériau sont indépendamment choisis parmi le cuivre et ses alliages, le titane et ses alliages, l'aluminium et ses alliages, les aciers et le vanadium, le premier matériau pouvant être identique ou différent du deuxième matériau.

10. Structure selon l'une des revendications 8 et 9, **caractérisée en ce que** la structure est un échangeur de chaleur comprenant des cavités agencées pour faire circuler un fluide, les cavités formant des canaux de circulation d'un fluide, tel qu'un gaz ou un liquide.

## Patentansprüche

1. Verfahren zur Herstellung einer Struktur, die Aussparungen umfasst, wobei das Verfahren die folgenden Schritte umfasst:
a) Bilden von ausgehöhlten Bereichen (110) in einer ersten Seite (101) eines Substrats (100) aus einem ersten Material,
wobei das Verfahren durch folgende Schritte gekennzeichnet ist:
b) Ablegen einer Platte (200) aus einem zweiten Material auf die erste Seite (101) des Substrats (100), so dass die ausgehöhlten Bereiche (110) des Substrats (100) bedeckt sind,
c) Durchführen eines Vakuum-Transparenzschweißens, Widerstandsschweißens oder Laserschweißens um die ausgehöhlten Bereiche herum, wodurch die Platte (200) auf das Substrat (100) geschweißt und Aussparungen gebildet werden,
d) Durchführen eines Diffusionsschweißungsschritts unter isostatischer Heißkompression an der erhaltenen Baugruppe.

2. Verfahren nach Anspruch 1, **dadurch gekennzeichnet, dass** in Schritt c ferner eine Lasertransparenzschweißung an der Kontur der Platte (200) durchgeführt wird.

3. Verfahren nach einem der vorhergehenden Ansprüche, **dadurch gekennzeichnet, dass** nach Schritt c) ein Entgasungsschritt an der Schnittstelle Platte (200)/Substrat (100) durchgeführt wird.

4. Verfahren nach einem der vorstehenden Ansprüche, **dadurch gekennzeichnet, dass** das Verfahren zwischen Schritt c) und Schritt d) folgende aufeinanderfolgende Schritte umfasst:
- Ablegen einer Abdeckung (300) auf der Platte (200),
- Schweißen der Abdeckung (300) an der Platte (200).

5. Verfahren nach dem vorhergehenden Anspruch, **dadurch gekennzeichnet, dass** das Verfahren nach dem Schweißen der Abdeckung (300) an der Platte (200) einen Schritt umfasst, bei dem ein Entgasungsschritt an der Schnittstelle Platte (200)/Abdeckung (300) durchgeführt wird.

6. Verfahren nach einem der Ansprüche 4 und 5, **dadurch gekennzeichnet, dass** die Abdeckung (300) mittels Laserschweißen, vorzugsweise unter Vakuum, auf die Platte (200) geschweißt ist.

7. Verfahren nach einem der vorhergehenden Ansprüche, **dadurch gekennzeichnet, dass** das erste Material und das zweite Material unabhängig voneinander aus Kupfer und seinen Legierungen, Titan und seinen Legierungen, Aluminium und seinen Legierungen, Stählen und Vanadium ausgewählt sind, wobei das erste Material und das zweite Material identisch oder unterschiedlich sein können.

8. Struktur, die Folgendes umfasst:
- ein Substrat (100) aus einem ersten Material, das ausgehöhlte Bereiche (110) in einer ersten Seite (101) des Substrats (100) umfasst,
wobei die Struktur durch Folgendes gekennzeichnet ist:
- eine Platte (200) aus einem zweiten Material, die die ausgehöhlten Bereiche (110) des Substrats (100) bedeckt, wobei die Platte (200) um die ausgehöhlten Bereiche (110) durch eine Schweißnaht (210) mit dem Substrat (100) verschweißt ist, die durch Vakuumtransparenz, Widerstandsschweißen oder Laserschweißen und Diffusion durch isostatische Heißkompression erzielt wurde, wobei die durch das Substrat (100) und die Platte (200) begrenzten ausgehöhlten Bereiche (110) Aussparungen bilden,
- eventuell eine Abdeckung (300), die auf die Platte (200) geschweißt ist.

9. Struktur nach Anspruch 8, **dadurch gekennzeichnet, dass** das erste Material und das zweite Material unabhängig voneinander aus Kupfer und seinen Legierungen, Titan und seinen Legierungen, Aluminium und seinen Legierungen, Stählen und Vanadium ausgewählt sind, wobei das erste Material identisch oder unterschiedlich von dem zweiten Material sein kann.

10. Struktur nach einem der Ansprüche 8 und 9, **dadurch gekennzeichnet, dass** die Struktur ein Wärmetauscher ist, der Aussparungen umfasst, die zur Zirkulation eines Fluids angeordnet sind, wobei die Aussparungen Zirkulationskanäle eines Fluids, wie eines Gases oder einer Flüssigkeit, bilden.

## Claims

1. A method for manufacturing a structure comprising cavities, the method comprising the following steps:
a) forming recessed areas (110) in a first face (101) of a substrate (100) made of a first material,
the method being **characterized by** the following steps:
b) depositing a plate (200) made of a second material over the first face (101) of the substrate (100), so as to cover the recessed areas (110) of the substrate (100),
c) carrying out a transparent welding under vacuum, a resistance welding or a laser welding, around the recessed areas, whereby the plate (200) is welded onto the substrate (100) and cavities are formed,
d) carrying out a step of hot isostatic pressing diffusion welding on the obtained assembly.

2. The method according to claim 1, **characterised in that**, during step c), a transparent laser welding is carried out over the contour of the plate (200).

3. The method according to any one of the preceding claims, **characterised in that**, after step c), a step of degassing is carried out at the plate (200)/substrate (100) interface.

4. The method according to any one of the preceding claims, **characterised in that** the method comprises, between step c) and step d), the following successive steps:
- depositing a cowl (300) over the plate (200),
- welding the cowl (300) onto the plate (200).

5. The method according to the preceding claim, **characterised in that**, after having welded the cowl (300) onto the plate (200), the method comprises a step during which a step of degassing is carried out at the plate (200)/cowl (300) interface.

6. The method according to one of claims 4 and 5, **characterised in that** the cowl (300) is welded onto the plate (200) by laser welding, preferably under vacuum.

7. The method according to any one of the preceding claims, **characterised in that** the first material and the second material are independently selected from among copper and its alloys, titanium and its alloys, aluminium and its alloys, steels and vanadium, the first material and the second material possibly being identical or different.

8. A structure comprising:
- a substrate (100) made of a first material comprising recessed areas (110) in a first face (101) of the substrate (100),
the structure being **characterized by** :
- a plate (200) made of a second material covering the recessed areas (110) of the substrate (100), the plate (200) being welded onto the substrate (100) around the recessed areas (110) by a weld (210) obtained by vacuum transparency, by resistance welding or by laser welding and by hot isostatic pressing diffusion, the recessed areas (110) delimited by the substrate (100) and the plate (200) forming cavities,
- possibly, a cowl (300) welded onto the plate (200).

9. The structure according to claim 8, **characterised in that** the first material and the second material are independently selected from among copper and its alloys, titanium and its alloys, aluminium and its alloys, steels and vanadium, the first material possibly being identical to or different from the second material.

10. The structure according to one of claims 8 and 9, **characterised in that** the structure is a heat exchanger comprising cavities arranged so as to make a fluid circulate, the cavities forming channels for the circulation of a fluid, such as a gas or a liquid.
